# EUROPÄISCHE PATENTSCHRIFT

(11) **EP 1 789 645 B1**
(45) Veröffentlichungstag und Bekanntmachung des Hinweises auf die Patenterteilung: **03.12.2008**
(21) Anmeldenummer: 05857283.5
(22) Anmeldetag: 17.08.2005
(51) Int. Cl.: E05F 15/20

(54) **FAHRZEUG MIT AUTOMATISCH ÖFFNENDER KLAPPE**
VEHICLE COMPRISING AN AUTOMATICALLY OPENING DOOR
VEHICULE A TRAPPE A OUVERTURE AUTOMATIQUE

(30) Priorität: 28.08.2004 DE 102004041709
(43) Veröffentlichungstag der Anmeldung: 30.05.2007
(73) Patentinhaber: Bayerische MotorenWerke Aktiengesellschaft, 80809 München (DE)
(72) Erfinder: EBERHARD, Siegfried, 80995 München (DE)
(86) Internationale Anmeldenummer: PCT/EP2005/008925
(87) Internationale Veröffentlichungsnummer: WO 2006/024399

(56) Entgegenhaltungen:
- EP-A- 1 207 262
- DE-A1- 19 813 025
- DE-A1- 19 959 990
- US-A1- 2001 042 989
- US-B1- 6 205 710

## Beschreibung

Die Erfindung betrifft ein Fahrzeug, insbesondere ein zweispuriges Kraftfahrzeug gemäß dem Oberbegriff des Anspruchs 1.

Ein gattungsbildendes Fahrzeug ist bereits aus dem Fahrzeugprogramm der Anmelderin bekannt. Beispielsweise wird in der Betriebsanleitung zum BMW 5-er Modell, Jahrgang 2002 Bestell-Nr. 01 40 0 156 808, Seite 34-36 ein Kraftfahrzeug mit automatisch öffnender Klappe und über Fernbedienung aktivierbarem Öffnungsmechanismus beschrieben. Hierbei kann der Bediener per Fernbedienung einen Öffnungsbefehl für die Heckklappe initiieren, welche sich dann automatisch vollständig öffnet.

Ferner ist bereits aus der DE 195 33 804 A1 ein Fahrzeug bekannt, bei dem mittels einem zusätzlichen Sensor an einer schwenkbaren Fahrzeugtüre der Abstand zu im Schwenkbereich der Türe befindlichen Gegenständen detektiert wird. Bei Unterschreitung eines vorbestimmten Abstandes zu dem detektierten Gegenstand wird eine Feststellvorrichtung zur Blockierung der weiteren Türöffnungsbewegung aktiviert.

Des Weiteren sind aus der DE 198 13 025 A1 und der DE 199 59 990 A1 Kraftfahrzeuge bekannt, bei denen der Öffnungsbereich einer automatisch öffnenden Heckklappe über eine Sensorik überwacht und bei Detektion eines Hindernisses der Öffnungsvorgang automatisch unterbrochen wird.

Der Erfindung liegt die Aufgabe zugrunde, ein gattungsgemäßes Fahrzeug derart weiterzubilden, dass das Öffnen von von außen (Fahrzeugäußeren) zugänglichen Fahrzeugklappen vereinfacht wird.

Erfindungsgemäß wird die Aufgabe durch die Gesamtheit der Merkmale des Anspruchs 1 gelöst. Durch die Anordnung eines zusätzlichen Näherungssensors, der über einen Benutzer gezielt als Schalter benutzt werden kann, indem der Benutzer im Erfassungsbereich des Näherungssensors eine Bewegung durchführt bzw. sich diesem bewusst gezielt mit zumindest einem Körperteil oder einem Gegenstand nähert, und ein speziell ausgebildetes mit dem Näherungssensor wirkverbundenes Steuergerät kann der Komfort für einen Fahrzeugbenutzer im Hinblick auf das Öffnen von von außen zugänglichen Fahrzeugklappen deutlich erhöht werden. Gemäß der Erfindung ist das Steuergerät hierfür derart ausgebildet, dass es das Vorhandensein eines gültigen Zugangsberechtigungsmittels (z.B. intelligenter Fahrzeugschlüssel bzw. keycard) erkennt und bei Vorliegen eines aufgrund des erkannten gültigen Zugangsberechtigungsmittels initiierten Zugangsberechtigungs-Erkennungssignals und zusätzlichem Vorliegen eines Entriegelungssignals (Abstands-Erkennungssignals) des Näherungssensors den Öffnungsmechanismus zur Freigabe der automatisch öffnenden Klappe aktiviert. Mit Hilfe der erfindungsgemäßen Vorrichtung kann ein Fahrzeugbenutzer, der seinen Fahrzeugschlüssel bei sich trägt und beide Hände aufgrund eines zu tragenden Gutes belegt hat, durch Aktivierung des zusätzlich vorhandenen Näherungssensors den Öffnungsvorgang einer automatisch öffnenden Klappe (Fahrzeugtüre, Kofferraumdeckel, Heckklappe, Tankdeckel oder Motorhaube) einleiten.

Mit Vorteil ist der mindestens eine Näherungssensor unterhalb der automatisch öffnenden Klappe mit Wirkungsrichtung in Richtung Fahrbahn angeordnet derart, dass ein Benutzer den Näherungssensor gezielt zu einem Schaltvorgang bzw. zur Erzeugung eines Entriegelungssignals veranlassen kann indem er beispielsweise im Wirkfeld des Näherungssensors zwischen Fahrbahnoberfläche und Näherungssensor seinen Fuß bewegt. In einer besonders bevorzugten Ausführung der Erfindung ist der Näherungssensor im unteren Bereich der Heckschürze (bzw. des Stoßfängers) angeordnet. Hierdurch wird insbesondere das automatische Öffnen der Heckklappe bzw. des Kofferraumdeckels eingeleitet.

Eine zusätzliche Funktionsabsicherung der erfindungsgemäßen Anordnung ist bei einer Weiterbildung der Erfindung vorgesehen. Die zusätzliche Absicherung erfolgt beispielsweise durch die Einbindung eines vorhandenen Abstandserfassungssystems für den Heckbereich eines Kraftfahrzeugs. Derartige Abstandserfassungssysteme, auch PDC-Syteme (park-distancecontrol-system) genannt, arbeiten in der Regel mit Ultraschall oder Radarstrahlung und werden gemäß dem bekannten Stand der Technik erst bei eingeschalteter Zündung und gleichzeitig eingelegtem Rückwärtsgang aktiviert. Im Rahmen der Erfindung ist das Steuergerät derart ausgebildet, dass ein vorhandenes Abstandserfassungssystem bereits bei ausgeschalteter Zündung aktiviert wird, insbesondere sobald das Steuergerät ein gültiges Zugangsberechtigungsmittel detektiert hat. Die Absicherung erfolgt dann dadurch, dass der bzw. jeder Näherungssensor erst mit Aktivierung des Abstandserfassungssystems, insbesondere erst bei Erkennung der Unterschreitung eines Mindestabstandes (Ansprechen des Abstandserfassungssystems), aktiv geschaltet wird. Hierdurch wird vermieden, dass nicht etwa unter dem Fahrzeug herlaufende Tiere die Öffnung einer Klappe auslösen, wenn der Benutzer sich bereits weiter vom Fahrzeug entfernt hat.
Eine alternative oder zusätzliche Absicherung der Funktion kann auch erfolgen, indem mindestens zwei voneinander beabstandete Näherungssensoren Verwendung finden. Dabei ist das Steuergerät bevorzugt derart ausgebildet, dass eine Öffnung der automatisch öffnenden Klappe nur erfolgt, wenn beide Näherungssensoren innerhalb eines definierten Zeitfensters und vorzugsweise in einer vorbestimmten Reihenfolge geschaltet bzw. betätigt werden.

Eine weitere wesentliche Weiterbildung und Absicherungsmaßnahme besteht darin, dass der Öffnungsmechanismus durch das Steuergerät nur aktiviert bzw. angesteuert wird, wenn das Fahrzeug steht und/oder die Zündung des Fahrzeugs ausgeschaltet ist.

Im Folgenden wird die Erfindung anhand von Figuren näher erläutert. Es zeigen:
- Figur 1:: ein erfindungsgemäßes Fahrzeug in Seitenansicht, in einer möglichen Ausführungsform,
- Figur 2:: das Fahrzeug gemäß Figur 1 in einer Heckansicht, und
- Figur 3:: eine Verknüpfungslogik zur Funktionsabsicherung in zwei möglichen Ausführungsformen.

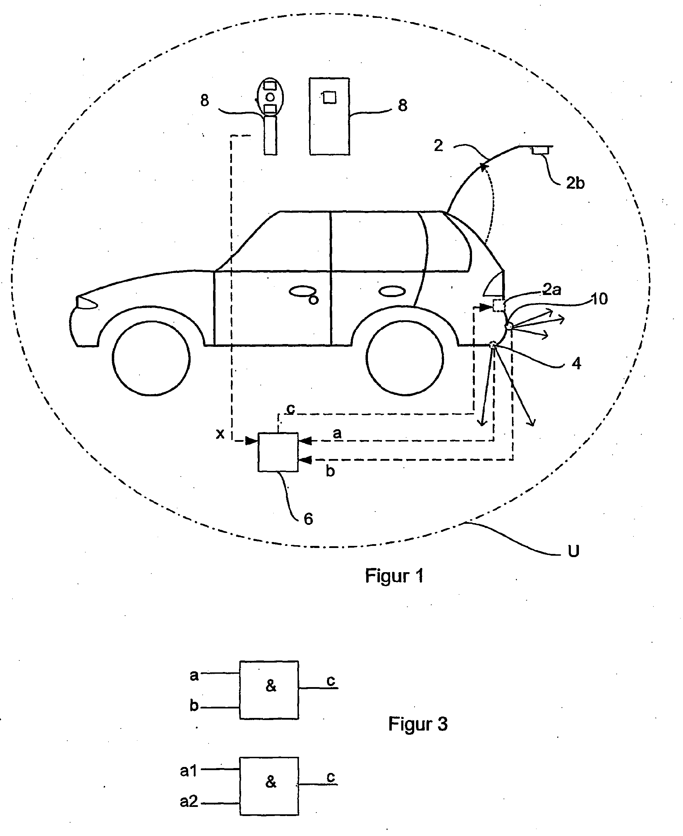

Figur 1 zeigt in schematischer Darstellung eine bevorzugte Ausführung des erfindungsgemäßen Fahrzeugs. Das Kraftfahrzeug umfasst eine aufgrund eines Öffnungsbefehls sich automatisch öffnende Klappe 2. Im dargestellten Ausführungsbeispiel ist die Klappe 2 als Heckklappe eines Kraftfahrzeuges ausgebildet. Die automatische Öffnung der Klappe 2 wird durch einen Öffnungsbefehl des Benutzers initiiert, aufgrund dessen ein Verriegelungs- bzw. Entriegelungsmechanismus 2a, 2b dazu veranlasst wird die Klappe 2 freizugeben, welche dann entweder aufgrund einer Federvorspannung oder aufgrund einer aktivierten (z.B. elektrischen, hydraulischen oder pneumatischen) Motorik in eine geöffnete Position überführt wird. Mit Vorteil wird die Klappe 2 dabei über ihren gesamten Öffnungsweg oder bis zu einem maximal erlaubten Öffnungsweg automatisch geöffnet. Der maximal erlaubte Öffnungsweg kann dabei mittels einer Vorrichtung gemäß der DE 100 56 569 A1 oder der DE 195 33 804 A1 vorgegeben sein. Ferner umfasst das Kraftfahrzeug zumindest einen, vorzugsweise zwei Näherungssensor(en) 4. Gemäß der Erfindung ist sowohl jeder Näherungssensor 4 als auch der Entriegelungsmechanismus 2a, 2b mit einem Steuergerät 6 wirkverbunden. Das Steuergerät 6 ist dabei derart ausgebildet, dass es zum einen das Vorhandensein eines Zugangsberechtigungsmittels 8 überwacht. Hierfür wird unter Einbindung des Steuergerätes 6 geprüft, ob innerhalb eines vorgegebenen Bereiches U um das Fahrzeug herum ein Zugangsberechtigungsmittel (in der Regel ein Benutzer, der einen Schlüssel oder eine keycard mit sich führt) vorhanden ist. Wird ein gültiges Zugangsberechtigungsmittel 8 erkannt (Vorliegen eines Zugangsberechtigungs-Erkennungssignals x) und wird dann zusätzlich durch den Näherungssensor 4 ein Entriegelungssignal a erzeugt, dann veranlasst das Steuergerät 6 den Entriegelungsmechanismus 2a, 2b über ein Steuersignal c die sich automatisch öffnende Klappe 2 freizugeben bzw. zu öffnen bzw. den Öffnungsvorgang einzuleiten. Mit Vorteil wird der bzw. jeder Näherungssensor 4 erst eingeschaltet, wenn über das Steuergerät 6 ein Zugangsberechtigungsmittel 8 im Umgebungsbereich U detektiert wurde.

Der mindestens eine Näherungssensor 4 ist vorzugsweise derart angeordnet, dass ein Benutzer ihn durch schwenken des Fußes im Bereich zwischen dem Fahrzeugaufbau und der Fahrbahnoberfläche zur Schaltung veranlassen bzw. schalten kann. Insbesondere ist der Näherungssensor 4 unterhalb eines Stoßfängers 12 oder auf der unteren Seite eines Stoßfängers 12 in diesen integriert angeordnet.

Des Weiteren ist vorzugsweise ein rückwärtiges (heckseitiges) Abstandserfassungssystem 10 (PDC) vorgesehen, welches bei ausgeschalteter Zündung bereits dann eingeschaltet wird, wenn durch das Steuergerät 6 ein Zugangsberechtigungsmittel 8 im Umgebungsbereich U erkannt wird. Auch in dieser Kombination wird der bzw. jeder Näherungssensor 4 zum Zwecke der Entriegelung mit Vorteil erst zu diesem Zeitpunkt aktiviert. Alternativ kann bei einer Ausführung mit Abstandserfassungssystem 10 jeder Näherungssensor 4 auch erst dann aktiviert bzw. eingeschaltet werden, wenn das vorhandene Abstandserfassungssystem 10 aufgrund eines erfassten Gegenstands anspricht und ein pdc-Signal b liefert.

Um zu vermeiden, dass die Klappe 2 auch bei fahrendem Fahrzeug automatisch öffnet, ist das Steuergerät 6 derart ausgebildet, dass eine Einleitung des Öffnungsvorgangs bzw. eine Erzeugung des den Öffnungsvorgang einleitenden Steuersignals c nur bei stehendem Fahrzeug insbesondere bei stehendem Fahrzeug und ausgeschalteter Zündung erfolgen kann. Das heißt, dass das über den Näherungssensor 4 erzeugte Entriegelungssignal a nur in Abhängigkeit von einer vordefinierten Bedingung (beispielsweise Bedingung: stehendes Fahrzeug) durchgeschaltet wird und einen automatischen Öffnungsvorgang der Klappe 2 einleiten kann.

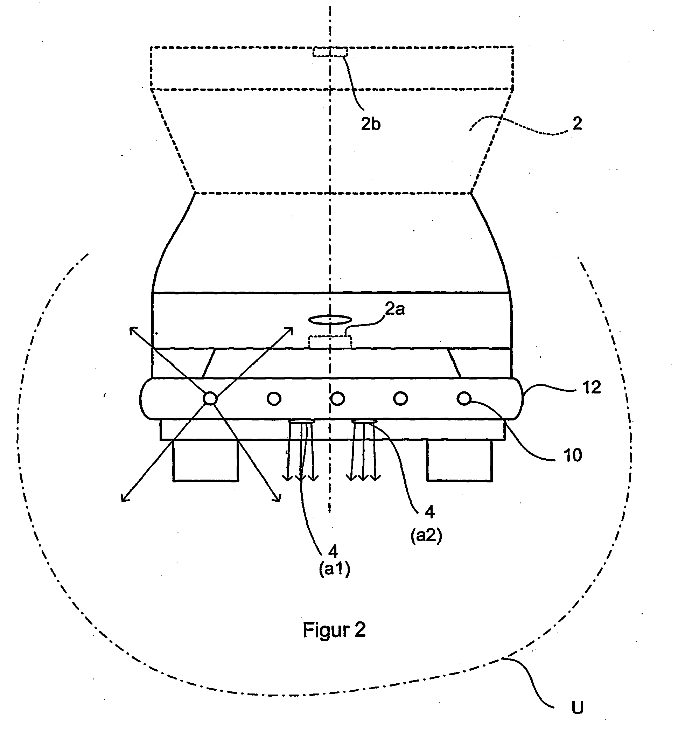

Die Figur 2 zeigt eine Heckansicht des bereits in Figur 1 dargestellten Fahrzeugs.
Figur 3 zeigt eine mögliche Verknüpfungslogik 14 in zwei möglichen Ausführungsformen, mittels der sicher gestellt werden soll, dass eine Öffnung der Klappe 2 nicht versehentlich bzw. nicht anders als bewusst durch den legitimierten Benutzer erfolgt. Hierfür sind in der oberen Logik 14 das durch den Benutzer mittels dem mindestens einen Näherungssensor erzeugte Entriegelungssignal a und das pdc-Signal b, welches aufgrund des sich dem Fahrzeug nähernden Benutzer erzeugt wird, auf ein gemeinsames UND-Glied geführt. Das Steuersignal c zur Initiierung der Öffnung der Klappe 2 bzw. zur Entriegelung des Ent- und Verriegelungsmechanismusses 2a, 2b wird demnach nur bei Vorliegen beider genannten Vorraussetzungen erzeugt.
Alternativ sind in der unteren Logik 14 mindestens zwei Entriegelungssignale a1, a2 auf die UND-Logik geführt, so dass für die Erzeugung des Steuersignals c nur erfolgt, wenn zwei Näherungssensoren 4 betätigt wurden. Auch ist eine Ausführung denkbar, in der die Signale a1...an aller Näherungssensoren 4 gemeinsam mit dem pdc-Signal b auf ein UND-Glied geführt und in Abhängigkeit dieser Bedingungen ein Steuersignal c erzeugt (bzw. das Entriegelungssignal a durchgeschaltet) wird (nicht dargestellt). Mit Vorteil müssen die Näherungssensoren 4 auch in einer bestimmten Reihenfolge und innerhalb eines definierten Zeitfensters betätigt werden, damit ein Steuersignal c generierbar ist. Beispielsweise kann hierfür mindestens ein Näherungssensor 4 auf ein Zeitglied (z.B. Monoflop) geführt sein.

## Patentansprüche

1. Fahrzeug, insbesondere Kraftfahrzeug, umfassend
- eine aufgrund eines Öffnungsbefehls automatisch öffnende Klappe (2), wobei der Öffnungsbefehl ohne manuelle Betätigung eines Ent-/Verriegelungsmechanismusses (2a, 2b) erfolgt,
**gekennzeichnet durch**
- einen Näherungssensor (4),
- und ein einerseits mit einem Ent-/ Verriegelungsmechanismus (2a, 2b) für die automatisch öffnende Klappe (2) und andererseits mit dem Näherungssensor (4) wirkverbundenes Steuergerät (6),
wobei das Steuergerät (6) derart ausgebildet ist, dass es das Vorhandensein eines gültigen Zugangsberechtigungsmittels (8) innerhalb eines Umgebungsbereiches (U) erkennt und bei Erkennen eines gültigen Zugangsberechtigungsmittels (8) in Abhängigkeit vom Vorliegen eines Entriegelungssignals (a) des Näherungssensors (4) den Ent-/ Verriegelungsmechanismus (2a, 2b) zur Freigabe der automatisch öffnenden Klappe (2) aktiviert.

2. Fahrzeug nach Anspruch 1,
**dadurch gekennzeichnet, dass** mindestens zwei Näherungssensoren (4) vorhanden sind und das Steuergerät (6) derart ausgebildet ist, dass es den Ent-/ Verriegelungsmechanismus (2a, 2b) bei Vorliegen von Abstandserkennungssignalen (a1, a2) beider Näherungssensoren (4) aktiviert.

3. Fahrzeug nach Anspruch 1 oder 2,
**dadurch gekennzeichnet, dass** der beziehungsweise jeder Näherungssensor (4) erst bei Erkennen eines gültigen Zugangsberechtigungsmittels (8) aktiviert beziehungsweise eingeschaltet wird.

4. Fahrzeug nach Anspruch 1 oder 2,
**dadurch gekennzeichnet, dass** ein Abstandserfassungssystem (10) für den hinter dem Fahrzeug liegenden Bereich vorhanden ist und das Steuergerät (6) derart ausgebildet ist, dass das Abstandserfassungssystem (10) bei Erkennen eines gültigen Zugangsberechtigungsmittels (8) eingeschaltet wird und der beziehungsweise jeder Näherungssensor (4) entweder ebenfalls bei Erkennen eines gültigen Zugangsberechtigungsmittels (8) oder erst mit dem Ansprechen des Abstandserfassungssystems (10) eingeschaltet wird.

5. Fahrzeug nach einem der vorstehenden Ansprüche,
**dadurch gekennzeichnet, dass** das Steuergerät (6) derart ausgebildet ist, dass es den Ent-/ Verriegelungsmechanismus (2a, 2b) ausschließlich bei stehendem Fahrzeug oder bei stehendem Fahrzeug und ausgeschalteter Zündung aktiviert.

6. Fahrzeug nach einem der vorstehenden Ansprüche,
**dadurch gekennzeichnet, dass** der beziehungsweise jeder Näherungssensor (4) derart am Fahrzeug angeordnet ist, dass seine Wirkungsrichtung zur Erfassung von Gegenständen nach unten in Richtung Fahrbahn gerichtet ist.

7. Fahrzeug nach einem der vorstehenden Ansprüche,
**dadurch gekennzeichnet, dass** der beziehungsweise jeder Näherungssensor (4) unterhalb des hinteren Stoßfängers (12) oder auf der Unterseite desselben in diesen integriert und mit seiner Wirkrichtung in Richtung Fahrbahn gerichtet angeordnet ist.

8. Fahrzeug nach einem der vorstehenden Ansprüche,
**dadurch gekennzeichnet, dass** die automatisch öffnende Klappe (2) der Kofferraumdeckel, die Hecklappe oder eine Einstiegstüre eines Kraftfahrzeugs ist.

## Claims

1. A vehicle, more especially a motor vehicle, comprising
- a flap (2) which opens automatically as a result of an opening command, wherein the opening command takes place without manual actuation of an unlocking/locking mechanism (2a, 2b), **characterised by**
- a proximity sensor (4),
- and a control apparatus (6) operatively connected, on the one hand, to an unlocking/locking mechanism (2a, 2b) for the automatically opening flap (2) and, on the other hand, to the proximity sensor (4), the control apparatus (6) being configured in such a way that it recognises the presence of a valid access authorisation means (8) within an environmental region (U) and on recognising a valid access authorisation means (8), as a function of the presence of an unlocking signal (a) of the proximity sensor (4), activates the unlocking/locking mechanism (2a, 2b) to release the automatically opening flap (2).

2. A vehicle according to claim 1, **characterised in that** at least two proximity sensors (4) are present and the control apparatus (6) is configured in such a way that it activates the unlocking/locking mechanism (2a, 2b) when distance recognition signals (a1, a2) of both proximity sensors (4) are present.

3. A vehicle according to claim 1 or 2, **characterised in that** the or each proximity sensor (4) is only activated or switched on when a valid access authorisation means (8) is recognised.

4. A vehicle according to claim 1 or 2, **characterised in that** a distance detection system (10) for the region located behind the vehicle is present and the control apparatus (6) is configured in such a way that the distance detection system (10) is switched on when a valid access authorisation means (8) is recognised and the or each proximity sensor (4) is either also switched on when a valid access authorisation means (8) is recognised or only with the response of the distance detection system (10).

5. A vehicle according to any one of preceding claims, **characterised in that** the control apparatus (6) is configured in such a way that it activates the unlocking/locking mechanism (2a, 2b) exclusively when the vehicle is stationary or when the vehicle is stationary and the ignition is switched off.

6. A vehicle according to any one of preceding claims, **characterised in that** the or each proximity sensor (4) is arranged on the vehicle in such a way that its direction of action, to detect objects, is directed downwardly in the direction of the road.

7. A vehicle according to any one of preceding claims, **characterised in that** the or each proximity sensor (4) is arranged below the rear bumper (12) or on the lower side thereof and integrated therein and with its direction of action directed in the direction of the road.

8. A vehicle according to any one of preceding claims, **characterised in that** the automatically opening flap (2) is the boot lid, the tailgate or an entry door of a motor vehicle.

## Revendications

1. Véhicule notamment véhicule automobile comprenant :
- un volet (2) ouvert automatiquement par un ordre d'ouverture, l'ordre d'ouverture étant émis sans actionnement manuel du mécanisme de déverrouillage/verrouillage (2a, 2b),
**caractérisé par**
- un capteur de proximité (4), et
- un appareil de commande (6) relié d'une part au mécanisme de déverrouillage/verrouillage (2a, 2b) du volet (2) s'ouvrant automatiquement et d'autre part au capteur de proximité (4),
l'appareil de commande (6) étant réalisé pour reconnaître la présence d'un moyen d'autorisation d'accès (8), valable, dans la zone d'environnement (U) et en cas de reconnaissance d'un moyen d'autorisation d'accès (8), valable, en fonction de l'existence d'un signal de déverrouillage (a) du capteur de proximité (4), il active le mécanisme de déverrouillage/verrouillage (2a, 2b) pour libérer le volet (2) s'ouvrant automatiquement.

2. Véhicule selon la revendication 1,
**caractérisé par**
au moins deux capteurs de proximité (4) et l'appareil de commande (6) est réalisé de façon à activer le mécanisme de déverrouillage/verrouillage (2a, 2b) en présence des signaux de détection de distance (a1, a2) des deux capteurs de proximité (4).

3. Véhicule selon la revendication 1 ou 2,
**caractérisé en ce que**
le capteur de proximité ou chacun des capteurs de proximité (4), est (sont) activé(s) ou branché(s) à la première détection d'un moyen d'autorisation d'accès, valable (8).

4. Véhicule selon la revendication 1 ou 2,
**caractérisé par**
un système de saisie de distance (10) pour la zone située derrière le véhicule et l'appareil de commande (6) est réalisé pour brancher le système de saisie de distance (10) reconnaissant un moyen d'autorisation d'accès (8), variable, et pour que le capteur de proximité (4) ou chacun des capteurs de proximité soit (soient) branché(s) également lors de la détection d'un moyen d'autorisation d'accès (8), valable, ou seulement lors de la mise en oeuvre du système de saisie de distance (10).

5. Véhicule selon l'une des revendications précédentes,
**caractérisé en ce que**
l'appareil de commande (6) est réalisé pour activer le mécanisme de déverrouillage/verrouillage (2a, 2b) exclusivement si le véhicule est à l'arrêt ou si le véhicule est à l'arrêt et l'allumage coupé.

6. Véhicule selon l'une des revendications précédentes,
**caractérisé en ce que**
le ou chacun des capteurs de proximité (4) est (sont) installé(s) sur le véhicule afin que sa (leurs) direction(s) d'action pour saisir les objets soit (soient) dirigée(s) vers le bas en direction de la chaussée.

7. Véhicule selon l'une des revendications précédentes,
**caractérisé en ce que**
le ou chacun des capteurs de proximité (4) est (sont) intégré(s) sous le pare-choc arrière (12) ou sous la face inférieure de celui-ci, dans le pare-choc, et sa (leurs) direction(s) d'action est (sont) dirigée(s) vers la chaussée.

8. Véhicule selon l'une des revendications précédentes,
**caractérisé en ce que**
le volet (2) qui s'ouvre automatiquement est le coffre, le volet arrière ou une portière du véhicule automobile.
